## Europäisches Patentamt

(19) **European Patent Office**

**Office européen des brevets**

(11) Veröffentlichungsnummer: **0 062 771**
**B1**

(12) # EUROPÄISCHE PATENTSCHRIFT

(45) Veröffentlichungstag der Patentschrift:
**11.09.85**

(51) Int. Cl.⁴: **H 04 Q 1/14**

(21) Anmeldenummer: **82101950.2**

(22) Anmeldetag: **11.03.82**

(54) **Aderverbindung für Fernmeldekabel.**

(30) Priorität: **04.04.81 DE 3113757**

(43) Veröffentlichungstag der Anmeldung:
**20.10.82 Patentblatt 82/42**

(45) Bekanntmachung des Hinweises auf die Patenterteilung:
**11.09.85 Patentblatt 85/37**

(84) Benannte Vertragsstaaten:
**AT BE CH FR IT LI LU NL SE**

(56) Entgegenhaltungen:
**EP - A - 0 005 350**
**DE - A - 1 810 175**
**DE - A - 2 309 236**
**FR - A - 2 394 188**
**FR - A - 2 445 630**

(73) Patentinhaber: **KRONE GmbH, Goerzallee 311,
D-1000 Berlin 37 (DE)**

(72) Erfinder: **Forberg, Horst, Rätikonweg 9a,
D-1000 Berlin 42 (DE)**
Erfinder: **Müller, Manfred, Schwedenstrasse 3a,
D-1000 Berlin 65 (DE)**

(74) Vertreter: **Patentanwälte Beetz sen. - Beetz jun. Timpe -
Siegfried - Schmitt-Fumian, Steinsdorfstrasse 10,
D-8000 München 22 (DE)**

BUNDESDRUCKEREI BERLIN

## Beschreibung

Die Erfindung betrifft einen Aderverbinder zum Verbinden von ankommenden und abgehenden Adern eines Fernmeldekabels, bei dem in einem aus einem Deckel und einem Unterteil bestehenden Gehäuse des Aderverbinders zum Verbinden zweier Adern jeweils ein löt-, schraub- und abisolierfreies Abschlußelement mit unter 45° zur Kabelachse stehenden Kontaktschenkeln im Unterteil fest angeordnet ist und das Unterteil Führungen und Klemmrippen für die ankommenden und abgehenden Kabeladern aufweist.

Ein solcher Aderverbinder ist aus der FR-A-2 394 188 bekannt. Bei diesem bekannten Aderverbinder dient zum Abschneiden der Kabelenden und zum Eindrücken der Kabeldrähte in die Klemmstellung ein besonderes Werkzeug.

Die innerhalb dieses Aderverbinders verwendete LSA-PLUS-Technik (Kurzwort für Löt-, Schraub- und Abisolierfreie Anschlußtechnik mit Polytropem Luft-Spalt) zum Anschließen von isolierten Leiterdrähten an Klemmkontakte, bei denen die Blattfederschenkel durch Torsionskräfte eine automatische Nachstellung (z. B. bei Alterung oder mechanischer Beanspruchung der Kontaktstellen) und damit eine dauerhaft gute Kontaktgabe bewirkt, hat in der Technik eine weite Verbreitung gefunden.

Diese LSA-PLUS-Technik wird auch im vorliegenden Aderverbinder angewendet, indem ankommende und abgehende Adern innerhalb eines Kunststoffgehäuses miteinander jeweils über einen LSA-PLUS-Kontakt verbunden werden.

Es sind eine Reihe von Aderverbindern für Fernmeldekabel bekannt, die sich nach folgenden Gesichtspunkten einordnen lassen:

1. Aderverbinderhülsen, die zur Verbindung je einer abgehenden und ankommenden Kabelader geeignet sind.
2. Verbinder, sogenannte Picabond-Verbinder, bei denen z. B. die zu- und abgehenden Drähte in ein im Querschnitt U-förmiges Metallteil geklemmt werden, das dann mit Hilfe eines Werkzeuges zusammengequetscht wird, wodurch eine elektrische Verbindung hergestellt ist.
3. Aderverbindungsleisten, die für eine Vielzahl von Adern bei gleichzeitiger Verbindung von z. B. je 20 Adern vorgesehen sind.

Nachteilig bei diesen bekannten Aderverbindern ist, daß z. B. bei den unter Punkt 1) genannten Aderverbindern die Adern auf vorgegebene Längen geschnitten werden müssen.

Die Aderverbindungshülsen müssen generell und die Picabond-Verbinder zweckmäßigerweise bei Kabelspleißen von ≤ 200 Doppeladern für jede Aderverbindung einzeln gequetscht werden.

Bei diesen beiden Typen von Aderverbindern ist das Aufschalten auf eine Leitung zum Zwecke einer Fehlersuche mit erheblichen Schwierigkeiten verbunden.

Beide unter Punkt 1) und 2) genannte Typen können nur einmal benutzt werden.

Nach Punkt 3) ist ein Verbinder für eine dünne isolierte elektrische Leitung aus der DE-PS 1 212 180 bekannt, wonach mehrere ankommende Drähte mit abgehenden Drähten mit Hilfe eines Verbindergliedes verbunden werden.

Die Kontaktstellen der verbundenen Adern sind gegen Rüttelbewegungen nur mangelhaft geschützt, was insbesondere bei dünnen Adern zu Kontaktunterbrechungen während der Erschütterung führen kann.

Die bekannten Aderverbindungsleisten sind nicht für längswasserdichte (fettgefüllte) Kabel geeignet.

Andererseits ist aus der FR-A-2 445 630 ein in einem Kunststoffgehäuse vorgesehenes Anschlußelement bekannt, an dem eine am Ende mit einer Sicke versehene Federzunge angeformt ist, die der Aufnahme einer Zusatzeinrichtung dient.

Schließlich ist aus der DE-A-1 810 175 ein Schaltblock für Trägerfrequenzanlagen bekannt, der Federzungen zur Aufnahme von Prüfsteckern enthält und bei dem die Kontaktträger mit Rastelementen versehen sind, die beim Zusammenbau des Schaltblocks in entsprechend ausgebildete Gegenöffnungen an der Grundplatte einrasten.

Der Erfindung liegt die Aufgabe zugrunde, einen Aderverbinder der eingangs genannten Art zu entwickeln, der sich auch für Adern längswasserdichter, fettgefüllter Kabel eignet und mit weniger Material- und Arbeitsaufwand kontaktsicher einsatzfähig ist.

Diese Aufgabe wird erfindungsgemäß dadurch gelöst, daß im Unterteil ein Messer zum Abschneiden der Kabelenden eingelegt ist, daß an jedem Anschlußelement eine am Ende mit einer Sicke versehene Federzunge angeformt ist, daß die Kontaktenden der Kontaktschenkel abgewinkelt und abstützend in Führungen gelagert sind, daß die Führungen des Unterteils rohrförmige Führungen oder kanalförmige Führungen sind, daß der Deckel und das Unterteil längswasserdicht verbunden sind und daß der Deckel ferner für jedes Anschlußelement eine Öffnung zum Einsetzen einer Prüfspitze enthält.

Weitere Ausgestaltungen der Erfindung sind in den Unteransprüchen gekennzeichnet.

Durch den neuen Aderverbinder werden folgende erfindungswesentliche Vorteile erreicht:

1. Es lassen sich mehrere Aderpaare, z. B. vier ankommende mit vier abgehenden Adern, in Anlehnung an Farbcodierungen gleichzeitig durch einen Preßvorgang verbinden.
2. Die anzuschließenden Kabeladern werden nach einer rohr- oder kanalförmigen Führung um 90° umgebogen und an die Anschlußelemente herangeführt und nach dem Preßvorgang, d. h. dem Aufdrücken des Deckels, zusätzlich in angeformten Klemmrippen gehalten.

Zusätzlich werden durch diesen Preßvorgang auch die überstehenden Adern durch eingelegte Messer, die hinter den Anschlußelementen angeordnet sind, auf die richtige Länge geschnitten.

3. Aufgrund der Anordnung von Federzungen an den Anschlußelementen läßt sich durch Ansetzen einer Prüfspitze ein Aufschalten auf jede einzelne Aderverbindung ermöglichen.

4. Durch geeignete Rastmittel sind das Unterteil und der Deckel im montierten Zustand verriegelt, der Aderverbinder ist somit auch für Adern fettgefüllter Kabel geeignet.

Die Erfindung soll anhand der in der Zeichnung dargestellten Ausführungsbeispiele näher erläutert werden. Es zeigt

Fig. 1 eine Seitenansicht des Aderverbinders mit angedeuteter Prüfspitze im Schnitt,

Fig. 2 eine Draufsicht mit teilweise aufgebrochener Darstellung der rohrförmigen Führung,

Fig. 3 eine Darstellung der Rastverbindung zwischen dem Unterteil und dem Deckel sowie eine Darstellung des kontaktierten Drahtes und des Anschlußelementes in Form von gestrichelten Linien; in dieser Form sind zwei hintereinander angeordnete Aderverbinder nach der Erfindung dargestellt, und

Fig. 4 eine Draufsicht mit teilweiser aufgebrochener Darstellung der kanalförmigen Führung.

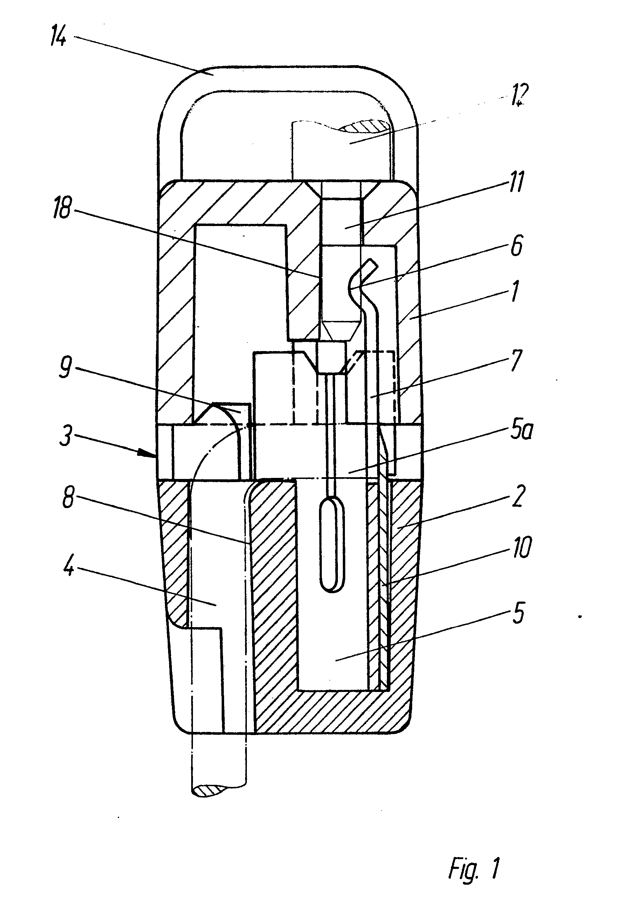

Wie die Fig. 1 zeigt, besteht das Gehäuse 3 des Aderverbinders aus zwei Teilen, und zwar aus dem Unterteil 2 und dem Deckel 1.

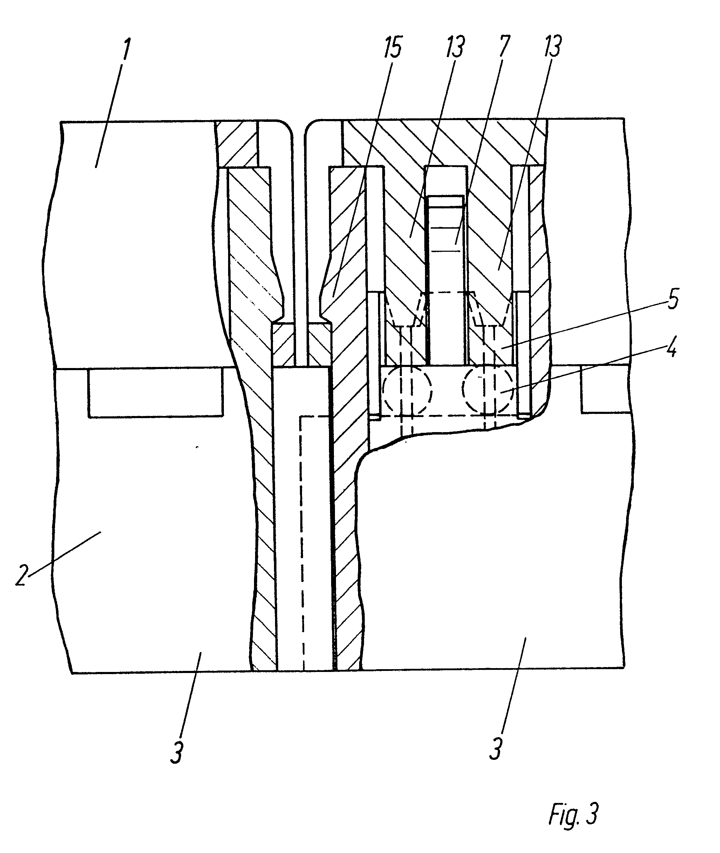

Miteinander verbunden sind diese beiden Teile durch ein bogenförmiges Filmscharnier 14. Durch Rasthaken 15 (Fig. 3) sind beide Teile miteinander verriegelt, so daß der Aderverbinder auch für Adern fettgefüllter Kabel geeignet ist.

Wie die Fig. 1 ferner zeigt, wird die Kabelader 4 von unten herangeführt, wobei der anzuschließende Draht zuerst durch eine rohr- oder kanalförmige Führung 8 geführt und dann um 90° umgebogen wird.

Beim Zusammenklappen des Deckels 1 wird die Kabelader 4 dann mittels der in Fig. 3 dargestellten Eindrückstege 13 in den Kontaktschlitz des Anschlußelementes 5 gedrückt, wodurch der Kontakt zwischen der Kabeladerseele und dem Anschlußelement 5 hergestellt ist.

Durch Klemmrippen 9 wird die Kabelader 4 in ihrer Lage fixiert.

Das Anschlußelement 5 selbst ist, wie aus der Fig. 1 ersichtlich, im Unterteil 2 des Aderverbinders eingebettet. Die Kontaktschenkel 5a nehmen hierbei in bekannter Weise eine ca. 45° zur Aderachse stehende Position ein. Hinter dem Anschlußelement 5 ist ein Messer 10 angeordnet, das das überstehende Kabeladerende abtrennt.

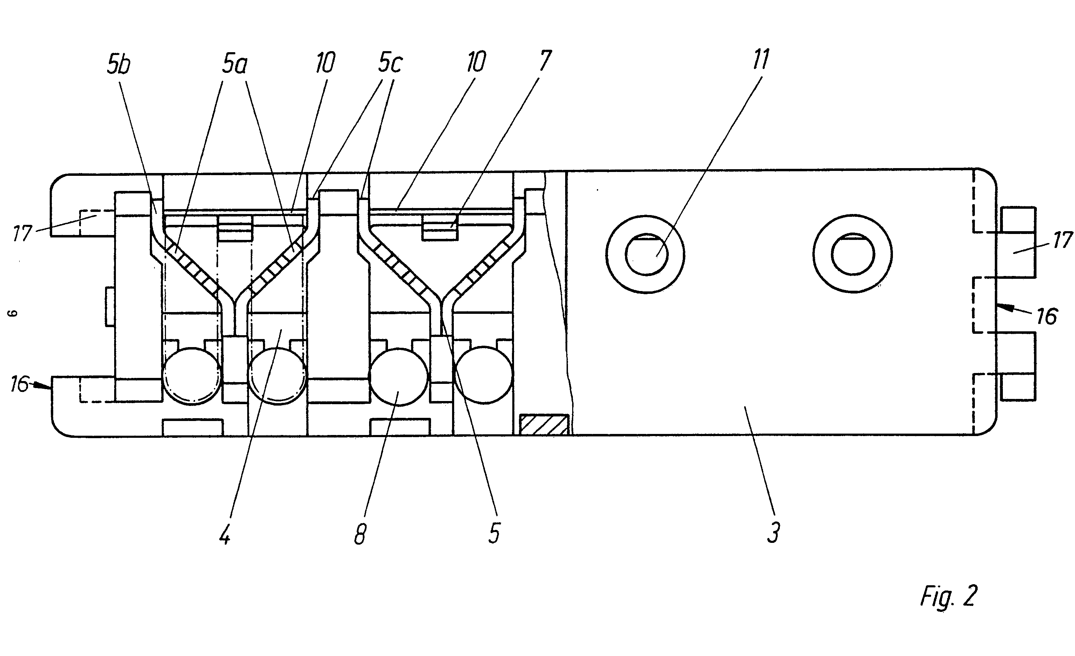

An einem Anschlußelement 5 werden jeweils eine ankommende und eine abgehende Kabelader angeschlossen. Wie die Fig. 2 zeigt, befinden sich innerhalb eines Gehäuses 3 vier Anschlußelemente 5.

Die Kontaktenden 5b der Kontaktschenkel 5a sind abgewinkelt gestaltet und in Führungen 5c stabilisiert gelagert. Von oben ist, wie die Fig. 1 und 2 zeigen, durch die Öffnung 11 des Deckels 1 eine Prüfspitze 12 einführbar.

Für jedes Anschlußelement 5 ist eine Öffnung 11 vorgesehen, so daß durch Ansetzen einer Prüfspitze 12 ein Aufschalten auf jede Aderverbindung hergestellt werden kann. Hierzu sind an den Anschlußelementen 5 Federzungen 7, die am Ende mit einer Sicke 6 versehen sind, angeformt.

Die Prüfspitze 12 wird zwischen der Federzunge 7 und der gegenüberliegenden Anlagefläche 18 federnd geklemmt.

Die Fig. 2 zeigt, daß an den Stirnseiten 16 des Aderverbinders Verbindungsmittel 17 zum Anschluß mehrerer Aderverbinder hintereinander zu Aderverbinderleisten vorgesehen sind. Ferner ist die Ausbildung der rohrförmigen Führung 8 ersichtlich.

Die Fig. 3 zeigt eine solche Anreihung von zwei Aderverbindern.

Das Gehäuse 3 des Aderverbinders, also das Unterteil 2 und der Deckel 1, bestehen zweckmäßig aus Kunststoff.

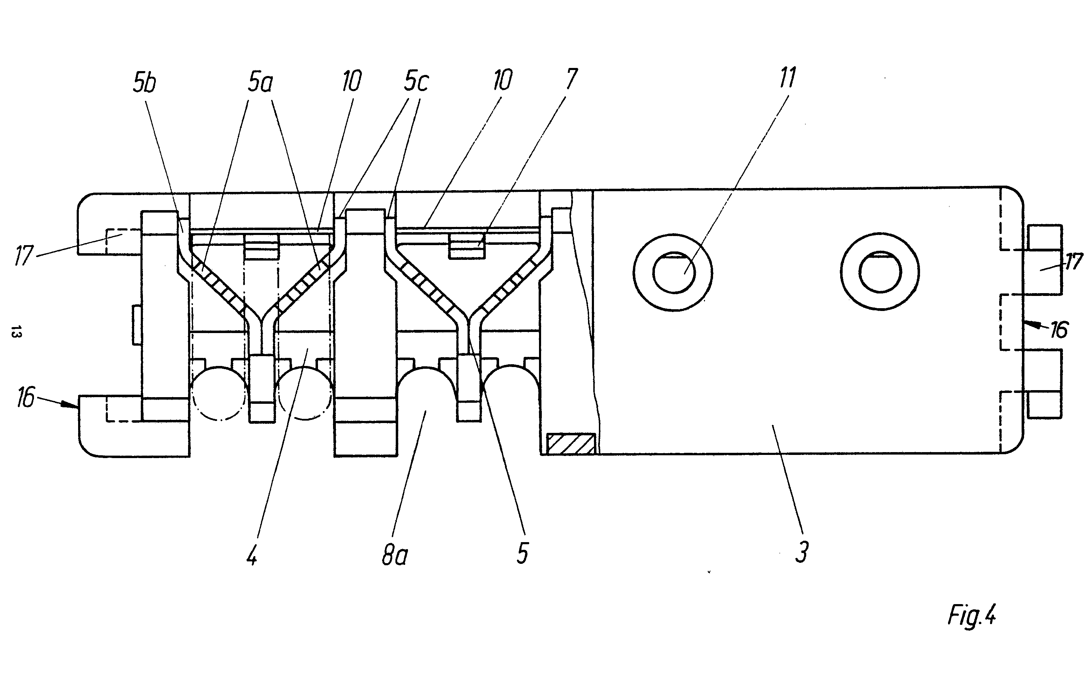

Die Fig. 4 zeigt insbesondere die Darstellung der kanalförmigen Führung 8a.

Bezugszeichenliste

1 Deckel
2 Unterteil
3 Gehäuse
4 ankommende bzw. abgehende Adern
5 Anschlußelement
5a Kontaktschenkel
5b Kontaktenden
5c Führungen
6 Sicke
7 Federzunge
8 rohrförmige Führung
8a kanalförmige Führung
9 Klemmrippen
10 Messer
11 Öffnung
12 Prüfspitze
13 Eindrückstege
14 Filmscharnier
15 Rasthaken
16 Stirnseiten
17 Verbindungsmittel
18 Anlagefläche

**Patentansprüche**

1. Aderverbinder zum Verbinden von ankommenden und abgehenden Adern eines Fernmeldekabels, bei dem in einem aus einem Deckel (1) und einem Unterteil (2) bestehenden Gehäuse (3) des Aderverbinders zum Verbinden zweier Adern (4) jeweils ein löt-, schraub- und abisolierfreies Anschlußelement (5) mit unter 45° zur Kabelachse stehenden Kontaktschenkeln (5a) im Unterteil (2) fest angeordnet ist und das Unterteil (2) Führungen und Klemmrippen (9) für die ankommenden und abgehenden Kabeladern aufweist, dadurch gekennzeichnet, daß im Unterteil (2) ein Messer (10) zum Abschneiden der Kabelenden eingelegt ist, daß an jedem Anschlußelement (5) eine am Ende mit einer Sicke (6) versehene Federzunge (7) angeformt ist, daß die Kontaktenden (5b) der Kontaktschenkel (5a) abgewinkelt und abstützend in Führungen (5c) gelagert sind, daß die Führungen des Unterteils (2) rohrförmige Führungen (8) oder kanalförmige Führungen (8a) sind, daß der Deckel (1) und das Unterteil (2) längswasserdicht verbunden sind und daß der Deckel (1) ferner für jedes Anschlußelement (5) eine Öffnung (11) zum Einsetzen einer Prüfspitze (12) enthält.

2. Aderverbinder nach Anspruch 1, dadurch gekennzeichnet, daß am Deckel (1) Eindrückstege (13) angeformt sind.

3. Aderverbinder nach Anspruch 1, dadurch gekennzeichnet, daß der Deckel (1) und das Unterteil (2) über ein bogenförmiges Filmscharnier (14) miteinander verbunden und mit Hilfe von Rasthaken (15) im montierten Zustand verriegelt sind.

4. Aderverbinder nach Anspruch 1, dadurch gekennzeichnet, daß an den Stirnseiten (16) des Aderverbinders Verbindungsmittel (17) zum Zusammenschluß von mehreren Aderverbindern hintereinander zu Aderverbinderleisten vorgesehen sind.

5. Aderverbinder nach Anspruch 1, dadurch gekennzeichnet, daß der Deckel (1) und das Unterteil (2) des Gehäuses (3) aus Kunststoff bestehen.

## Claims

1. A connector for connecting incoming and outgoing wires of a telephone cable, in which in a body (3) of the connector which consists of a cover (1) and a bottom part (2), a respective solderless, stripless and unscrewed terminal element (5) including contact arms (5a) extending at an angle of 45° to the axis of the cable is fixedly mounted in the bottom part (2), and the bottom part (2) comprises guide means and clamping ribs (9) for the incoming and outgoing wires, characterized in that the bottom part (2) has inserted therein a knife (10) for severing the cable ends, that each terminal element (5) has integrally formed therewith a resilient tongue (7) having a crimped portion (6) at one end, that the contact ends (5b) of the contact arms (5a) are bent and are supportingly mounted in guide means (5c), that the guide means of the bottom part (2) are tubular guide means (8) or channel-like guide means (8a), that the cover (1) and the bottom part (2) are joined to each other longitudinally in water-tight fashion, and that the cover (1) further-more comprises for each terminal element (5) an aperture (11) for insertion of a test prod (12) therein.

2. A connector as claimed in claim 1, characterized in that webs (13) adapted to be urged inwardly are integrally formed with the cover (1).

3. A connector as claimed in claim 1, characterized in that the cover (1) and the bottom part (2) are joined to each other via an arcuate film-type hinge (14) and are locked in the assembled state by means of detents (15).

4. A connector as claimed in claim 1, characterized in that the end faces (16) of the connector have provided thereon connecting means (17) for interconnecting in series a plurality of connectors to form connector blocks.

5. A connector as claimed in claim 1, characterized in that the cover (1) and the bottom part (2) of the body (3) are made of plastics.

## Revendications

1. Connexion de conducteurs pour assembler les conducteurs d'entrée et de sortie d'un câble de communication, dans laquelle un élément de raccordement (5) sans soudure, sans vissage et sans nécessité de dénuder les fils, est disposé d'une manière fixe dans la pièce de base (2) avec des branches de contact (5a) disposées à 45° par rapport à l'axe du câble, afin d'assurer la jonction de deux conducteurs (4) et dans laquelle la pièce de base (2) présente des guides et des nervures de blocage (9) pour les conducteurs de câble d'entrée et de sortie, caractérisée en ce que un couteau (10) est encastré dans la pièce de base (2), afin de couper les extrémités de câble, en ce qu'une languette élastique (7), pourvue d'un rebord (6) à une extrémité, est disposée sur chaque élément de raccordement (5), en ce que les extrémités de contact (5b) des branches de contact (5a) sont repliées et prennent appui dans des guides (5c), en ce que les guides de la pièce de base (2) sont des guides tubulaires (8) ou des guides en forme de canal (8a), en ce que le couvercle (1) et la pièce de base (2) sont assemblés par un joint étanche à l'eau sur toute sa longueur et en ce que le couvercle (1) contient, en outre, pour chaque élément de raccordement (5), une ouverture (11) pour l'introduction d'une sonde d'essai (12).

2. Connexion de conducteurs selon la revendication 1, caractérisée en ce que des traverses de compression (13) sont réalisées d'une pièce avec le couvercle (1).

3. Connexion de conducteurs selon la revendication 1, caractérisée en ce que le couvercle (1) et la pièce de base (2) sont assemblés par une charnière (14), formée d'une feuille mince cintrée en arc et sont bloqués, après montage, au moyen de crochets d'emboîtement (15).

4. Connexion de conducteurs selon la revendication 1, caractérisée en ce que des dispositifs de jonction (17) sont prévus sur les faces frontales (16) de la connexion de conducteurs en vue de l'assemblage de plusieurs connexions de conducteurs l'une derrière l'autre, de manière à former des barrettes de connexion de conducteurs.

5. Connexion de conducteurs selon la revendication 1, caractérisée en ce que le couvercle (1) et la pièce de base (2) du boîtier (3) sont réalisés en matière plastique.

Fig. 1

Fig. 2

Fig. 3

0 062 771

Fig. 4